# EUROPÄISCHE PATENTSCHRIFT

(11) **EP 0 510 500 B1**
(45) Veröffentlichungstag und Bekanntmachung des Hinweises auf die Patenterteilung: **08.11.1995**
(21) Anmeldenummer: 92106473.9
(22) Anmeldetag: 15.04.1992
(51) Int. Cl.: A01B 73/00, A01D 90/12, B60P 3/40

(54) **Transportvorrichtung**
Transport device
Dispositif de transport

(30) Priorität: 24.04.1991 DE 4113299
(43) Veröffentlichungstag der Anmeldung: 28.10.1992
(73) Patentinhaber: DEERE & COMPANY, Moline, Illinois 61265 (US)
(72) Erfinder: Wolf, Helmut, W-6650 Homburg-Einöd (DE); Bramstedt, Gerd, W-6660 Zweibrücken (DE)
(74) Vertreter: Feldmann, Bernhard

(56) Entgegenhaltungen:
- DE-A- 2 204 962
- DE-A- 2 644 360
- DE-A- 2 835 049
- DE-U- 7 802 933
- US-A- 4 384 445
- : Prospekt "Wetherell, Combine Head Transport"

## Beschreibung

Die Erfindung betrifft eine Transportvorrichtung für ein Arbeitsgerät mit einer Verbindungsstange und einem Fahrgestell, die zum Anschluß an einen Rahmen des Arbeitsgeräts mittels einer Halterung bzw. an dessen Unterseite mittels Anschlußmitteln geeignet sind.

Transportvorrichtungen werden dazu benutzt, Arbeitsgeräte wie etwa Sämaschinen, Bodenbearbeitungswerkzeuge, Erntegutaufnahmevorrichtungen, Schneidwerke, Pflückvorsätze und dergleichen so aufzunehmen, daß sie hinter einem Fahrzeug hergezogen werden können. Meist handelt es sich bei den Arbeitsgeräten um solche, die eine zur Fahrt auf öffentlichen Straßen höchstzulässige Breite überschreiten und deshalb im öffentlichen Verkehr nicht quer an dem Fahrzeug belassen werden können. Bei dem Fahrzeug handelt es sich normalerweise um einen Ackerschlepper, einen Mähdrescher, einen Feldhäcksler, einen Schwadmäher oder dergleichen, also um das Fahrzeug, an das das Arbeitsgerät während des Betriebs angeschlossen ist.

Herkömmlich werden als eine derartige Transportvorrichtung ein- oder zweiachsige Wagen verwendet, die einen Längsrahmen mit Auflageflächen enthalten und mit einem an dem Fahrzeug vorgesehenen Zugmaul verbindbar sind. Abgesehen davon, daß derartige sich über nahezu die gesamte Länge des bis zu sechs Meter breiten/langen Arbeitsgeräts erstreckende Transportwagen relativ sperrig sind, ist ihre Herstellung mit entsprechend hohen Fertigungskosten verbunden.

Demgegenüber sieht eine aus der DE-PS-26 44 360 bekannte Transportvorrichtung vor, an der Vorder- und der Rückseite des Arbeitsgeräts einen Adapter anzubringen, an den jeweils ein Fahrgestell angeschlossen werden kann. Das vordere Fahrgestell wird mit einer Deichsel an das Fahrzeug angehängt.

Dieser Transportvorrichtung haftet der Nachteil an, daß sie zwei Fahrgestelle benötigt und die beiden Fahrgestelle das gesamte Gespann beträchtlich verlängern, was hinsichtlich der Transportfahrt nicht erwünscht ist.

Der Prospekt "Wetherell, Combine Head Transport", welcher alle Merkmale des Oberbegriffs zeigt, offenbart eine Transportvorrichtung für Erntebergungsvorsätze von Erntemaschinen, die sich aus einer Deichsel und einem Fahrgestell zusammensetzt. Während die Deichsel an einen Endbereich des Erntebergungsvorsatzes angebracht werden kann, ist der Anschluß des Fahrgestells an dessen Unterseite im gegenüberliegenden Endbereich vorgesehen, wobei in beiden Fällen Bolzen für einen schnellen Anschluß verwendet werden.

Diese Transportvorrichtung ist insofern nachteilig, als beim Transport der Erntebergungsvorrichtung im an die Erntemaschine angebauten Zustand die Deichsel und das Fahrgestell auf einem Lieferwagen oder dergl. getrennt nachgeführt werden müssen.

Die der Erfindung zugrunde liegende Aufgabe wird darin gesehen, eine Transportvorrichtung zu schaffen, die auch dann noch zweckmäßig ist, wenn die Erntebergungsvorrichtung im angebauten Zustand transportiert wird.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise kann das vordere Fahrgestell entfallen, was eine Kostenreduzierung bewirkt. Außerdem tritt eine Verringerung der Gesamtlänge des Gespanns ein, da das eine Fahrgestell ganz entfallen kann und das andere Fahrgestell unterhalb des Arbeitsgeräts angeordnet ist. Darüberhinaus ist es möglich, die Verbindungsstange an dem Fahrgestell über eine Kupplungsvorrichtung anzuschließen, so daß dieses auch als Gespann ohne Arbeitsgerät auf dem Hof bewegt oder bei der Fahrt über das Feld hinter dem Fahrzeug hergezogen werden kann.

Eine einfache Art der Anbringung der Verbindungsstange ergibt sich durch eine Teleskopverbindung, wobei vorteilhafterweise die Verbindungsstange in ein Rohr, das zugleich ein als Halterung dienender Teil des Rahmens sein kann, möglichst vollends einschiebbar ist.

Wird die Verbindungsstange soweit in das Rohr hinein geschoben oder mit der Halterung in Deckung gebracht, daß sie seitlich nicht über das Arbeitsgerät übersteht, kann sie während des Betriebs dort untergebracht werden.

Zum Erzielen einer sicheren Verbindung zwischen dem Fahrgestell und dem Arbeitsgerät sind erste und zweite Anschlußmittel vorgesehen, die aus Haken und Bolzen, aus Ketten und Aufnahmeöffnungen, aus Haltern mit Öffnungen und Riegeln oder dergleichen gebildet werden können. Diese ermöglichen es, die Räder an dem Arbeitsgerät für den Transport anzubringen. Selbstverständlich braucht die Achse des Fahrgestells nicht als ein zylindrischer starrer Gegenstand ausgeführt zu sein; sie kann einen Achskörper und eine Anschlußplatte oder dergleichen enthalten.

Die Verbindung zwischen dem Arbeitsgerät bzw. dessen Rahmen und dem Fahrgestell wird noch stabiler, wenn formschlüssige Elemente, wie eine mit dem Fahrgestell verbundene Platte oder darauf befestigte Zapfen, vorgesehen sind, die in entsprechende, sich vorzugsweise aus der Struktur des Rahmens ergebende Öffnungen eingreifen. Eine derartige Verbindung ist leicht herzustellen, da das Arbeitsgerät von oben auf das Fahrgestell abgesenkt wird und dort aufgrund des Eigengewichts unverlierbar ruht. Auch bei Erschütterungen kann sich das Arbeitsgerät nicht von dem Fahrgestell trennen, weil es über die Anschlußmittel gehalten ist.

Das Fahrgestell kann sehr einfach vor einem völligen Absenken des Arbeitsgeräts für den späteren Anschluß ausgerichtet und in dieser Stellung gehalten werden, wenn es gegen ein Kippen um die Raddrehachse mittels einer vorzugsweise zur Anpassung an die verschiedenen Verhältnisse höhenverstellbaren Abstellstütze gesichert wird.

Die höhenverstellbare Abstellstütze braucht nicht jeweils in eine obere Stellung hochgedreht zu werden, in der sie nicht mehr mit dem Boden in Kontakt kommen kann, wenn sie entweder leicht demontierbar ist, was z. B. mittels einer Bolzenverbindung möglich wäre, oder wenn sie in eine Außerbetriebsstellung geschwenkt werden kann.

Wird an dem Fahrgestell seitlich ein Bügel angebracht, an dem gleichzeitig die Abstellstütze befestigt ist, kann das Fahrgestell mittels dieses Bügels unter das Arbeitsgerät geschoben und positioniert werden. Ist der Bügel lösbar, kann er mit der Abstellstütze in eine Außerbetriebsstellung gebracht und beispielsweise auf das Arbeitsgerät aufgelegt werden.

Eine gegebenenfalls zu beachtende Kippbewegung des Arbeitsgeräts um seine Längsachse wird vermieden, wenn sich von dem Fahrgestell zu einer Seite des Arbeitsgeräts eine Haltevorrichtung erstreckt, die z. B. an einer Haspel, einer Leitstange oder dergleichen angreift und, soweit sie höhenverstellbar ist, sich den jeweiligen Gegebenheiten anpassen kann.

In der Zeichnung ist ein nachfolgend näher beschriebenes Ausführungsbeispiel der Erfindung dargestellt. Es zeigt:
- Fig. 1: ein Arbeitsgerät mit einer erfindungsgemäßen Transportvorrichtung in Seitenansicht und

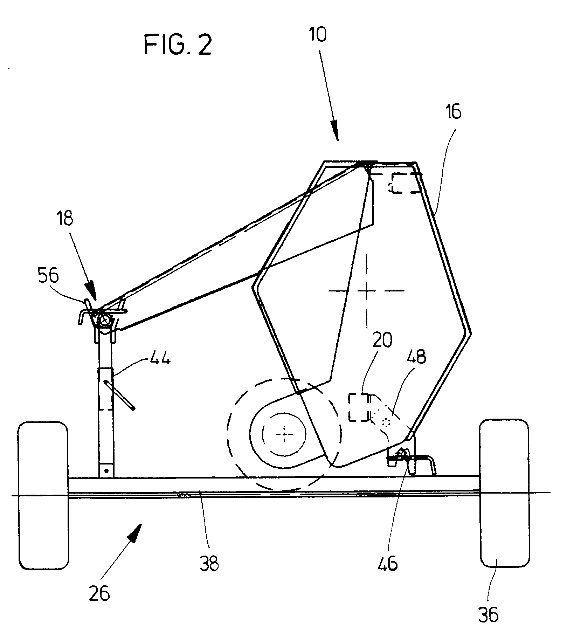

- Fig. 2: das Arbeitsgerät mit der Transportvorrichtung in Vorderansicht.

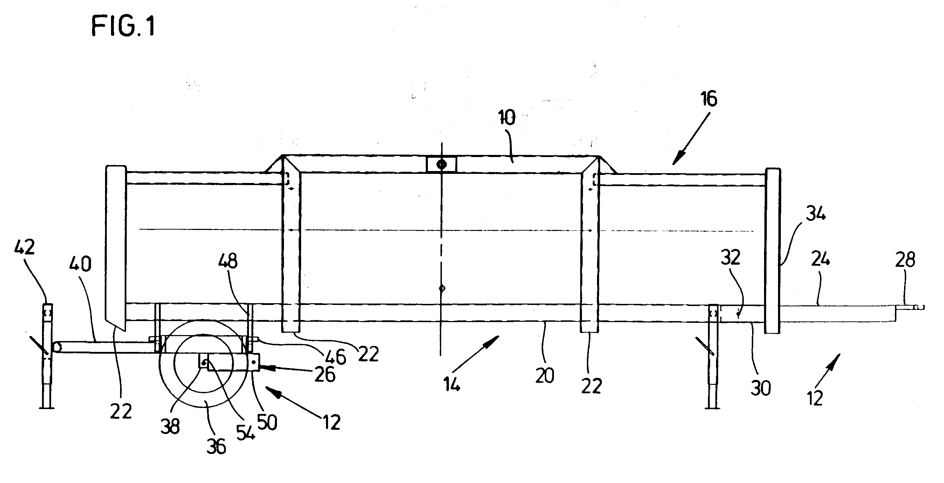

Ein in Figur 1 gezeigtes Arbeitsgerät 10 stützt sich mittels einer erfindungsgemäßen Transportvorrichtung 12 beweglich auf dem Boden ab.

Bei dem Arbeitsgerät 10 handelt es sich in diesem Fall um eine sogenannte Pick-up, die an die Vorderseite eines Feldhäckslers angebaut werden kann. Das Arbeitsgerät 10 ist nur in Umrissen wiedergegeben und enthält wenigstens einen Rahmen 14, einen Aufbau 16 und eine Querstange 18, die normalerweise als Unfallschutz dient. Ein derartiges Arbeitsgerät 10 weist z. B. eine Breite von ca. 4 m auf und muß während der Fahrt auf öffentlichen Straßen hinter einem Fahrzeug hergezogen werden.

Der Rahmen 14 besteht aus einem Längsrohr 20, das sich über die gesamte Länge des Arbeitsgeräts 10 erstreckt, und aus auf dieses aufgeschweißten Querstegen 22, die zueinander einen Abstand belassen. Der Querschnitt des Längsrohrs 20 ist vorzugsweise vieleckig, er kann aber auch rund sein.

Der Aufbau 16, der eine Schnecke, Zinken und Leitbleche enthalten kann, ist auf den Rahmen 14 aufgeschweißt oder aufgeschraubt und enthält die funktionalen Elemente des Arbeitsgeräts 10.

Die Querstange 18 erstreckt sich über die gesamte Länge des Aufbaus 16 und befindet sich an dessen seitlichem Abschluß mit Bezug auf die Längsachse des Arbeitsgeräts 10.

Die Transportvorrichtung 12 setzt sich aus einer Verbindungsstange 24 und einem Fahrgestell 26 zusammen, die im folgenden erläutert werden.

Die Verbindungsstange 24 ist in diesem Ausführungsbeispiel geradlinig ausgeführt, sie könnte aber ebenso gekrümmt sein. Ihre Länge ist so gewählt, daß sie sich von unterhalb des Rahmens 14 bis zu einem nicht gezeigten Zugmaul an einem Fahrzeug erstreckt und dabei genügend Freiraum zwischen dem Arbeitsgerät 10 und dem Fahrzeug beim Wenden beläßt. An dem vorderen Ende der Verbindungsstange 24 ist eine Zugöse 28 vorgesehen, die sich vorzugsweise innerhalb des Umfangs der Verbindungsstange 24 hält. An dem der Zugöse 28 gegenüberliegenden Endbereich ist die Verbindungsstange 24 derart profiliert, daß sie in das Längsrohr 20 einschiebbar ist, das in seinem Aufnahmebereich somit eine Halterung 30 für die Verbindungsstange 24 bildet. In dem Bereich der Halterung 30 ist mindestens ein Sicherungselement 32 vorgesehen, das sich durch fluchtende Öffnungen in der Halterung 30 und der Verbindungsstange 24 erstreckt und somit zwischen diesen eine formschlüssige Verbindung herstellt. Ist das Längsrohr 20 und somit auch die Halterung 30 und zumindest der darin aufgenommene Endbereich der Verbindungsstange 24 vieleckig ausgebildet, liegt die Verbindungsstange 24 in der Halterung 30 drehfest, so daß die Sicherungselemente 32 nur verhindern, daß die Verbindungsstange 24 aus der Halterung 30 heraus gezogen wird. Die Verbindungsstange 24 könnte aber ebenso seitlich an die Halterung 30 angeschraubt werden. Ist die Verbindungsstange 24 über ihre gesamte Länge geradlinig, d. h. zylindrisch ausgebildet und steht auch die Zugöse 28 nicht radial über, und ist darüberhinaus in der Halterung 30 genügend Freiraum vorhanden, kann die Verbindungsstange 24 vollkommen in die Halterung 30 und somit in das Längsrohr 20 eingeschoben werden, so daß sie nicht mehr über eine Seitenfläche 34 des Arbeitsgeräts 10 übersteht.

Das Fahrgestell 26 wird insbesondere gebildet von Rädern 36, einer Achse 38 und darüberhinaus von einem Bügel 40, einer Abstellstütze 42, einer Haltevorrichtung 44 und ersten und zweiten Anschlußmitteln 46 und 48. Schließlich kann es ein erstes und ein zweites nicht gezeigtes Paßstück enthalten.

Die Räder 36 sind weder angetrieben noch lenkbar und können um eine Drehachse 54 rotieren.

Es können sowohl zwei einzelne oder doppelte Räder 36 als auch zwei Achsen 38 mit vier oder acht Rädern 36 vorgesehen werden.

Die Achse 38 nimmt an ihren Enden auf nicht gezeigte Weise die Räder 36 drehbar auf und erstreckt sich unterhalb und vorzugsweise über die gesamte Breite des Arbeitsgeräts 10, so daß sich die Räder 36 seitlich davon befinden. Die Achse 38 kann aus einer einfachen Stange oder einem schweißzusammenbau bestehen und hat lediglich die Aufgabe, die beiden Räder 36 drehbar aufzunehmen und mit dem Arbeitsgerät 10 zu verbinden.

Der Bügel 40 erstreckt sich mehr oder weniger in einer horizontalen Ebene und weist in dieser die Form eines "U" auf, dessen Schenkel endseitig an der Achse 38 vorzugsweise lösbar angreifen. Der Steg des "U" verläuft quer zu dem Arbeitsgerät 10 und kann dazu benutzt werden, das Fahrgestell 26 mit der Hand zu manövrieren. Die Schenkel des Bügels 40 sind so lang, dar das Fahrgestell 26 von einer Bedienungsperson unter das Arbeitsgerät 10 an die gewählte Stelle geschoben werden kann. Der Bügel 40 kann starr an der Achse 38 angreifen oder dort in Hülsen eingeschoben und arretiert werden.

Die Abstellstütze 42 ist bei diesem Ausführungsbeispiel von herkömmlicher, teleskopartiger und längenveränderlicher Bauweise und durch Schweißen oder eine Schraub-Verbindung auf nicht gezeigte Weise an den Bügel 40 sich vertikal erstreckend angeschlossen. Die Abstellstütze 42 kann auch an dem Bügel 40 schwenkbar angebracht werden und in eine Betriebs- und eine Außerbetriebsstellung geschwenkt werden. Dadurch, daß sich die Abstellstütze 42 seitlich der Drehachse 54 befindet, schwenkt aufgrund des Gewichts des Bügels 40 und der Abstellstütze 42 das Fahrgestell 26 mit Blick auf die Zeichnung entgegen dem Uhrzeigerdrehsinn und stützt sich gegenüber dem Boden auf der Abstellstütze 42 ab. Das Fahrgestell 26 kippt also nicht um, wenn es unter das Arbeitsgerät 10 in die richtige Stellung gebracht ist.

Auf die Achse 38 ist zudem die sich vertikal erstreckende Haltevorrichtung 44 aufgesetzt, die ebenfalls von herkömmlicher, teleskopartiger und längenveränderlicher Bauweise ist und an ihrem oberen Ende eine Gabel 56 trägt, die in Formschluß mit der Querstange 18 gebracht werden kann. Auf diese Weise stützt sich das Arbeitsgerät 10 über die Gabel 56 und die Haltevorrichtung 44 auf dem Fahrgestell 26 ab und kann nicht aufgrund ihres Übergewichts kippen.

An der Achse 38 sind die ersten Anschlußmittel 46 in der Form sich horizontal erstreckender Bolzen starr befestigt, und zwar derart, daß sie von oben her von den zweiten Anschlußmitteln 48, die vorzugsweise als Haken oder Gabeln ausgebildet sind, übergriffen werden können. Sobald ein Formschluß zwischen den Anschlußmitteln 46, 48 erzielt ist, werden Stecker in die zweiten Anschlußmittel 48 eingeschoben, die ein Austreten der ersten Anschlußmittel 46 verhindern. Die zweiten Anschlußmittel 48 können an den Querstegen 22 oder dem Aufbau 16 an geeigneter Stelle vorgesehen werden. Es ist zudem abhängig von der Gestaltung des Arbeitsgeräts 10, ob die Anschlußmittel 46, 48 auf beiden Seiten des Arbeitsgeräts 10 vorgesehen werden oder nur auf einer Seite. Dadurch wird jedenfalls das Fahrgestell 26 unverlierbar mit dem Arbeitsgerät 10 verbunden.

Schließlich kann auf die Oberseite der Achse 38 ein erstes Paßstück aufgesetzt, d. h. geschweißt oder geschraubt werden, das exakt zwischen zwei einander benachbarte Querstege 22 paßt. Das erste Paßstück kann als eine Platte oder als ein Rahmen mit den durch den Abstand der Querstege 22 vorgegebenen Maßen ausgebildet sein.

Ein zweites Paßstück würde durch den Zwischenraum zwischen zwei benachbarten Querstegen 22 gebildet werden, in den das erste Paßstück genau paßte und somit die Zugkräfte zwischen dem Arbeitsgerät 10 und dem Fahrgestell 26 aufnehmen könnte.

An der Achse 38 kann schließlich eine Kupplungsvorrichtung 50, die der Halterung 30 nachgebildet ist, angebracht sein, über die die Verbindungsstange 24 anschließbar ist.

Nach alledem zeigt sich, daß die Transportvorrichtung 12 den Rahmen 14 des Arbeitsgeräts 10 als Verbindung zwischen ihrer Verbindungsstange 24 und ihrem Fahrgestell 26 nutzt und somit ohne einen eigenen Längsaufbau auskommen kann.

Zum Aufsetzen des Arbeitsgeräts 10 auf die Transportvorrichtung 12 wird das Fahrgestell 26 so positioniert, daß sich die Anschlußmittel 46, 48 und gegebenenfalls die beiden Paßstücke decken und das Fahrgestell 26 mittels der Abstellstütze 42 abgestützt - es sei denn, eine zweite Person steht zur Verfügung, die das Fahrgestell 26 in seiner Stellung hält. Anschließend wird das Arbeitsgerät 10 abgesenkt, bis der Formschluß zwischen ihm und dem Fahrgestell 26 hergestellt ist. Dann werden die Anschlußmittel 46, 48 miteinander verriegelt und die Abstellstütze 42 in ihre Außerbetriebsstellung gebracht. Schließlich wird die Verbindungsstange 24 aus der Halterung 30 gezogen und mittels des Sicherungselements 32 festgelegt. Sofern eine Stütze an der Verbindungsstange 24 oder dem Arbeitsgerät 10 angebracht ist, wird diese bis zum Anhängen des nun fahrbaren Arbeitsgeräts 10 in ihre Betriebsstellung gebracht. Schließlich wird das Arbeitsgerät 10 von dem Fahrzeug getrennt und die Verbindungsstange 24 mit dessen Zugmaul verbunden.

## Patentansprüche

1. Transportvorrichtung (12) für ein Arbeitsgerät (10) mit einer Verbindungsstange (24) und einem Fahrgestell (26), die zum Anschluß an einen Rahmen (14) des Arbeitsgeräts (10) mittels einer Halterung (30) bzw. an dessen Unterseite mittels Anschlußmitteln (46, 48) geeignet sind, dadurch gekennzeichnet, daß an dem Fahrgestell (26) eine Kupplungsvorrichtung (50) für den Anschluß der Verbindungsstange (24) vorgesehen ist.

2. Transportvorrichtung nach Anspruch 1, gekennzeichnet durch eine Ausbildung der Verbindungsstange (24) als Deichsel einenends derart, daß sie in eine als Rohr ausgebildete Halterung (30) einschiebbar ist.

3. Transportvorrichtung nach Anspruch 1 oder 2, gekennzeichnet durch eine Länge und Form der Verbindungsstange (24) derart, daß sie in der Halterung nicht oder nicht wesentlich über eine Seitenfläche (34) des Arbeitsgeräts (10) hinausragend aufgenommen werden kann.

4. Transportvorrichtung nach einem oder mehreren der vorherigen Ansprüche, dadurch gekennzeichnet, daß das Fahrgestell (26) aus einer Räder (36) tragenden Achse (38) und mit der Achse (38) verbundenen ersten Anschlußmitteln (46) besteht, wobei die ersten Anschlußmittel (46) mit zweiten Anschlußmitteln (48) zusammenpassen und dem Anschluß der Achse (38) an den Rahmen (14) dienen.

5. Transportvorrichtung nach Anspruch 4, dadurch gekennzeichnet, daß an der Achse (38) ein erstes Paßstück vorgesehen ist, das in ein zweites Paßstück an dem Arbeitsgerät (10) einfügbar ist.

6. Transportvorrichtung nach einem oder mehreren der vorherigen Ansprüche, dadurch gekennzeichnet, daß das Fahrgestell (26) eine Abstellstütze (42) aufweist, die das Fahrgestell (26) seitlich des Drehpunkts der Räder (36) auf dem Boden abstützt.

7. Transportvorrichtung nach Anspruch 6, dadurch gekennzeichnet, daß die Abstellstütze (42) in eine Außerbetriebsstellung bringbar ist.

8. Transportvorrichtung nach Anspruch 6 oder 7, dadurch gekennzeichnet, daß die Abstellstütze (42) an einem sich von dem Fahrgestell (26) seitlich wegerstreckenden, vorzugsweise lösbaren Bügel (40) angebracht ist.

9. Transportvorrichtung nach einem oder mehreren der vorherigen Ansprüche, dadurch gekennzeichnet, daß an dem Fahrgestell (26) eine Haltevorrichtung (44) vorgesehen ist, die im Seitenbereich des Arbeitsgeräts (10) angreift und dieses gegen ein Kippen um seine Längsachse sichert.

10. Transportvorrichtung nach Anspruch 9, dadurch gekennzeichnet, daß die Haltevorrichtung (44) höhenverstellbar ist.

## Claims

1. A transport device (12) for an implement (10), with a coupling bar (24) and a chassis (26), which are adapted to be connected to a frame (14) of the implement (10) respectively by means of a retainer (30) and by means of attachment means (46, 48) at the underside of the frame, characterized in that a coupling device (50) for attachment of the coupling bar (24) is provided on the chassis (26).

2. A transport device according to claim 1, characterized by formation of the coupling bar (24) as a tongue at one end such that it can be pushed into a retainer (30) formed as a tube.

3. A transport device according to claim 1 or 2, characterized by a length and shape of the coupling bar (24) such that it can be so received in the retainer that it projects not at all or only insignificantly beyond a side surface (34) of the implement (10).

4. A transport device according to one or more of the preceding claims, characterized in that the chassis (26) consists of an axle (38) carrying wheels (36) and first attachment means (46) connected to the axle (38), wherein the first attachment means (46) mate with second attachment means (48) and serve to couple the axle (38) to the frame (14).

5. A transport device according to claim 4, characterized in that a first adapter is provided on the axle (38) and can be introduced into a second adapter on the implement (10).

6. A transport device according to one or more of the preceding claims, characterized in that the chassis (26) has a parking support (42) which supports the chassis (26) on the ground to one side of the centre of rotation of the wheels (36).

7. A transport device according to claim 6, characterized in that the parking support (42) can be brought into a non-operating position.

8. A transport device according to claim 6 or 7, characterized in that the parking support (42) is fitted to a yoke (40) which extends to the side of the chassis (26) and is preferably releasable.

9. A transport device according to one or more of the preceding claims, characterized in that a retaining device (44) is provided on the chassis (26) and engages in the side region of the implement (10) and secures this against tilting about its longitudinal axis.

10. A transport device according to claim 9, characterized in that the retaining device (44) is adjustable in height.

## Revendications

1. Dispositif de transport (12) pour un outil de travail (10) comportant une barre d'accouplement (24) et un châssis (26), et qui sont appropriés pour le raccordement à un châssis (14) de l'outil de travail (10) à l'aide d'un dispositif de retenue (30) ou à la face inférieure de l'outil à l'aide de moyens de raccordement (46, 48), caractérisé en ce qu'un dispositif d'accouplement (50) pour le raccordement de la barre d'accouplement (24) est prévu sur le châssis (26).

2. Dispositif de transport selon la revendication 1, caractérisé par un agencement de la barre d'accouplement (24) à l'une de ses extrémités, sous la forme d'un timon de telle sorte qu'elle peut être insérée dans un élément de retenue (30) agencé sous la forme d'un tube.

3. Dispositif de transport selon la revendication 1 ou 2, caractérisé par une longueur et une forme de la barre d'accouplement (24), telle que cette barre peut être logée dans l'élément de retenue de manière à ne pas faire saillie ou à ne pas faire saillie de façon importante par rapport à une surface latérale (34) de l'outil de travail (10).

4. Dispositif de transport selon une ou plusieurs des revendications précédentes, caractérisé en ce que le châssis (26) est constitué par un essieu (38) portant des roues (36), et par des premiers moyens de raccordement (46) reliés à l'essieu (38), les premiers moyens de raccordement (46) étant adaptés à des seconds moyens de raccordement (48) et étant utilisés pour le raccordement de l'essieu (38) sur le châssis (14).

5. Dispositif de transport selon la revendication 4, caractérisé en ce que sur l'essieu (38) est prévu un premier élément d'adaptation, qui peut être inséré dans un second élément d'adaptation situé sur l'outil de travail (10).

6. Dispositif de transport selon une ou plusieurs des revendications précédentes, caractérisé en ce que le chassis (26) possède un montant d'appui (42), qui supporte le châssis (26) sur le sol, latéralement par rapport au centre de rotation des roues (36).

7. Dispositif de transport selon la revendication 6, caractérisé en ce que le montant d'appui (42) peut être amené dans une position hors-service.

8. Dispositif de transport selon la revendication 6 ou 7, caractérisé en ce que le montant d'appui (42) est monté sur un étrier (40), de préférence amovible, qui s'étend latéralement à partir du châssis (26).

9. Dispositif de transport selon une ou plusieurs des revendications précédentes, caractérisé en ce que sur le châssis (26) est prévu un dispositif de retenue (44), qui retient la partie latérale de l'outil de travail (10) et empêche un basculement de ce dernier autour de son axe longitudinal.

10. Dispositif de transport selon la revendication 9, caractérisé en ce que le dispositif de retenue (44) est réglable en hauteur.
